# EUROPEAN PATENT APPLICATION

(11) **EP 3 255 562 A1**
(43) Date of publication of application: **13.12.2017**
(21) Application number: 16173808.3
(22) Date of filing: 09.06.2016
(51) Int. Cl.: G06F 17/30

(54) **METHOD AND SYSTEMS FOR MONITORING CHANGES FOR A SERVER SYSTEM**

(71) Applicant: Mastercard International Incorporated, Purchase NY 10577 (US)
(72) Inventor: GILLIGAN, Robert, Smithfield, Dublin 7 (IE); BOLLARD, Glen, Rush, Co. Dublin (IE); SUTTON, Grace, Sandyford, Dublin 18 (IE)
(74) Representative: Richardson, Mark Jonathan

(57) **Abstract**

A method and systems for monitoring changes for a server system (200) are disclosed. Data are obtained (100) from the server system, and the data are processed (102) to determine a first change for the server system. A record of the first determined change is stored (104). The first determined change is then compared (106) to a second determined change (100a-104a) for the server system, and the comparison is used (108) to evaluate the second determined change for the server system. The second determined change may be a current change for the server system, and the first determined change a previously determined change; the step of comparing may compare (106) the stored record of the previously determined change to the current change.

## Description

### FIELD OF THE INVENTION

This invention is directed to methods and systems for monitoring changes for a server system, such as a database server system.

### BACKGROUND OF THE INVENTION

Generic database systems and server systems are well known to the art. Generally, such systems include at least one server machine hosting database information or data, and usually a server or database management system.

Such systems are often dynamic, in that the data held by the server, the database or the database management system are regularly updated with new information or data, or with rearrangement, reformatting, removal or the like of existing information. Such systems are also subject to possible errors or inconsistencies in the data held.

Certain basic monitoring systems for server systems are known. For example, a previously considered system may comprise software loaded on the database server, in addition to the database and database management system. Such systems are typically passive, in that they are usually only active when a problem occurs in the database, which triggers the monitoring system. Previously considered systems are usually also simplistic, in that they only monitor the database for certain types of problems or changes, and are generally unsophisticated in their analysis of the problems or changes. Moreover, such systems typically only assess short term changes in the database, and report such changes accordingly. Furthermore, such systems are typically unable to determine, from changes detected, which are important, or which are of a particular type.

The present invention aims to address these problems and provide improvements upon the known devices and methods.

### STATEMENT OF INVENTION

Aspects and embodiments of the invention are set out in the accompanying claims.

In general terms, one embodiment of a first aspect of the invention can provide a method of monitoring changes for a server system, comprising: obtaining data from the server system; processing, at a processor, the data to determine a first change for the server system; storing at a storage device a record of the first determined change; comparing, at the processor, the first determined change to a second determined change for the server system; and using, by the processor, the comparison to evaluate the second determined change for the server system.

This comparison of the changes themselves, rather than merely the underlying data to determine the change, allows for more detailed analysis, consideration or evaluation of the changes to be made. For example, prioritisation and categorisation of changes determined can be carried out. This method also provides a means for long term monitoring of changes to the server or database, for example for analysing the historical progression of changes of given types or locations.

The server system may be a database server system, such as those known to the art. The change determined, for the server system, may be any alteration, modification, variance, discrepancy, difference, divergence or the like in the data, or relating to the data of the server system. For example, a change in a data object, such as a table of the database, may be found in the processing or analysis of the data.

The step of storing the record of the first determined change may not be carried out before the comparison of the first and second determined changes; for example, the storage and comparison may be contemporaneous. The record may first be generated from the first determined change, before storage. In embodiments, the first and second determined changes may also be contemporaneously determined.

Alternatively, or preferably, the second determined change is a current change for the server system, and the first determined change is a previously determined change for the server system, and the step of comparing comprises comparing the stored record of the previously determined change to the current change.

The previously determined change may be a change determined for a first time point, and the current determined change may be a change determined for a current, second time point. Determination of the change for the first (or second) time point may comprise comparison of data from respective time points, one of which being the first (or second) time point. For example, for the change for the first time point, comparison may be made between data for the first time point, and a time point preceding the first time point.

This provides a means for observing the history of the changes made to the system. The comparison between current and previous changes may be between the current and all previous changes, with all previous changes in a given set, or with only specific changes from that set.

Suitably, the step of obtaining comprises obtaining data from a dataset of the server system, and wherein the method comprises, for the second determined change: obtaining data from said dataset of the server system; and processing, at the processor, the data to determine the second change.

This feature can provide a means for assessing the history of changes in the server or database within the same dataset.

Alternatively, the steps of obtaining and processing comprise: obtaining data from a first dataset of the server system, and processing the data to determine the first change; and obtaining data from a second dataset of the server system, and processing the data to determine the second change.

This feature on the other hand can provide a means for comparing the determined change in question with a determined change from another type of data, from another dataset, or for a determined change in a different location in the server data or database. This and other features of embodiments of the invention can provide the ability to categorise changes in the system.

Suitably, the steps of comparing and using the comparison comprise: comparing, at the processor, one or more qualitative or quantitative parameters for the first and second determined changes for the server system; and using, by the processor, the one or more parameters to evaluate one or more differences between the second change and the first change.

The qualitative or quantitative evaluation of the differences between the first and second changes is used to analyse the changes, or the progression of the changes, or the similarity or difference of the changes, to provide information on the dynamic nature of the system. For example, the evaluation may constitute measuring how similar the first change in the dataset or database is to the second change, or to all/some past changes. This measure of similarity can be used to determine whether the latest change is more significant than usual.

The evaluation can be used to establish patterns in a series of changes to a server/database, for example to the same dataset of the server/database. The evaluation may be used to compare changes in different datasets. For example, a frequency of changes in one dataset may be compared with that in another, potentially flagging changes that are occurring too (in)frequently in the other.

The evaluation can also be used to prioritise, rank, order and categorise changes. For example, a more dissimilar change may be ranked more highly, so that it can be reported. A change in one dataset which is similar to that in another can be grouped with that other, despite the changes being in different datasets.

In an embodiment, the method comprises, following the step of using the comparison: recording an evaluation of the second change; and transmitting a message enclosing the evaluation. Thus a message can be transmitted for reporting the results of the evaluation, for example to alert a user or another system to a particularly significant change in the system.

In embodiments, the steps of obtaining the data and processing the data to determine the first change for the server system comprise: obtaining present data from the server system; obtaining previously obtained data from the server system; and determining, at the processor, the first change between the present data and the previously obtained data.

Suitably, the steps of obtaining the data and processing the data to determine the first change comprise: obtaining data, for a first time point, of a dataset of the server system; obtaining data, for a second time point, of the dataset of the server system, comparing, at the processor, the first time point data with the second time point data; and using, by the processor, the comparison to determine the first change for the server system between the first and second time points.

Features of this kind allow advantages of the invention such as providing a comprehensive or fail-safe monitoring system, in which the entire contents of a dataset are compared to previous (entire) contents of the dataset, so that any change whatsoever will be detected, whether or not a specific type or location of change is being sought.

In embodiments, the method comprises, following the step of storing the record of the change determined, discarding data used to determine the change. This allows for only the change determined to be stored, and for redundant data (such as old previous dataset contents) to be deleted. This therefore allows for consolidation, de-cluttering of the monitoring storage, and potentially frees up that resource for other uses.

In embodiments, the server system is a database system, and comprises: a database; and a database management system. The database and/or management system may comprise a database schema, a database administrator or the like.

Suitably, the data from the server system comprises data relating to one or more of: data objects; schema; size; status; access history; synchronisation; replication; operating system; and management parameters of a database of the server system. In embodiments, the step of processing the data to determine a first change may comprise comparing data relating to one or more of these.

For example, the data may relate to a change in status of the system, from a normal running mode to an error mode. The processing may therefore determine the change between these modes from the data from the system. In another example, the processing may find a change in a data object, such as an edited object in a relational table database.

One embodiment of a second aspect of the invention can provide a method of monitoring a server system, comprising: obtaining a determined current change for the server system; storing a record of the determined current change; comparing the determined current change to a stored record of a previously determined change for the server system; and using the comparison to evaluate the current change for the server system.

One embodiment of a third aspect of the invention can provide a system for monitoring changes for a server system, comprising a processor configured to carry out the method of any preceding claim.

One embodiment of a fourth aspect of the invention can provide a system for monitoring changes for a server system, comprising: a first hardware system on which the server system is operated; a second hardware system separate from the first hardware system, comprising at least one processor; and a transmission device configured to transfer data from the server system from the first hardware system on which the server system is operated, to the second hardware system, wherein the processor of the second hardware system is configured to: obtain data from the server system; process the data to determine a first change for the server system; store a record of the first determined change; compare the first determined change to a second determined change for the server system; and use the comparison to evaluate the second change for the server system.

The second hardware system may comprise a monitoring server system, and the first hardware system may comprise a server, such as a database server. The (database) servers may therefore be the clients of the monitoring server system, and the (database) servers may serve data source clients, providing database services for those clients. The hardware systems may be single or distributed systems, or components of such systems.

Further aspects of the invention comprise computer program applications, or computer readable media comprising computer program code, adapted, when loaded into or run on a computer or processor, to cause the computer or processor to carry out a method according to any of the aspects and embodiments described above.

The above aspects and embodiments may be combined to provide further aspects and embodiments of the invention.

Processors and/or controllers may comprise one or more computational processors, and/or control elements having one or more electronic processors. Uses of the term "processor" or "controller" herein should therefore be considered to refer either to a single processor, controller or control element, or to pluralities of the same; which pluralities may operate in concert to provide the functions described. Furthermore, individual and/or separate functions of the processor(s) or controller(s) may be hosted by or undertaken in different control units, processors or controllers.

To configure a processor or controller, a suitable set of instructions may be provided which, when executed, cause said control unit or computational device to implement the techniques specified herein. The set of instructions may suitably be embedded in said one or more electronic processors. Alternatively, the set of instructions may be provided as software to be executed on said computational device.

### BRIEF DESCRIPTION OF THE DRAWINGS

The invention will now be described by way of example with reference to the accompanying drawings, in which:
Figure 1 is a diagram illustrating steps of a method according to an embodiment of the invention;
Figure 2 is a schematic diagram illustrating a monitoring system according to an embodiment of the invention;
Figure 3 is a diagram illustrating components of a monitoring system according to an embodiment of the invention;
Figure 4 is a diagram illustrating components of a server system according to an embodiment of the invention; and
Figures 5 and 6 are schematic diagrams illustrating methods according to embodiments of the invention.

### DETAILED DESCRIPTION OF EMBODIMENTS

Embodiments of the invention provide systems and methods for monitoring servers or databases by comparing determined changes between snapshots of the datasets or database(s) thereon. Thus it is not merely the changes in the datasets/database(s) which are monitored, but the way these changes compare to each other, for example in historical trends.

This in turn entails that methods of embodiments can track, learn and become familiar with the changes happening in the system, allowing for example prioritisation and categorisation of the changes as they happen, and long term analysis of dataset/database changes. This enhances the advantages of an "always-on" type monitoring system, as the changes continually being measured can be a more valuable source of information for the monitoring system, once they are also being compared to each other.

One previously considered monitoring system may monitor a change in the current status of a process of a pre-defined rule, for example, the status of a database changing from open to closed, which may prompt an alert. Embodiments of the invention in contrast provide comparison of changes which can allow different types of monitoring analysis to be performed, such as tracking the progress of changes to a database, or monitoring the frequency of changes. The systems of embodiments are therefore aware of how an environment has looked/changed in the past, and can alert on changes that previously considered monitoring tools would not have considered an event.

For example, a change to an object name will not cause an event such as a database going down; these are the sorts of events that previously considered monitoring systems may have been intended to check for. Embodiments of the invention however are more comprehensive and holistic as all possible changes are tracked, and compared with previous changes. The monitoring system will in effect be aware of, in this example, what the object name should be, and can therefore prompt an alert on this change.

Embodiments of the invention are applicable to databases and database systems, but also to server systems which may not necessarily be designated as database servers, but nevertheless store data, the management of which may require monitoring.

Embodiments of the invention are server or database (DB) monitoring tools which will, for example, alert a user or other system when changes are made to a database, for instance to a schema within an object-relational database or database management system. The tools can accommodate the necessity for change control and schema change integrity within database administration.

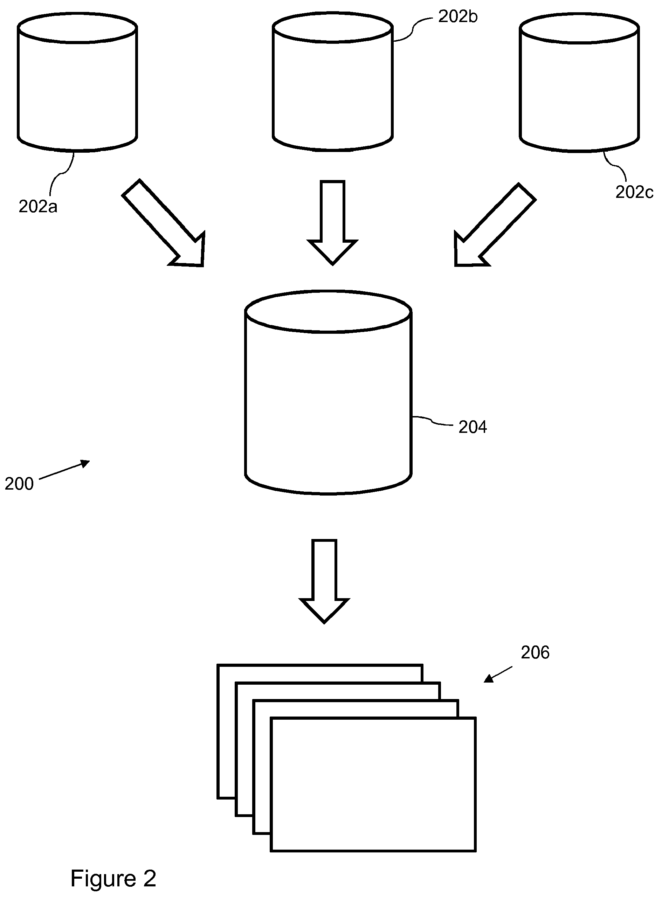

The monitoring tool itself can reside within the hub monitoring system (such as that shown in Figure 2 (204)), and all functionality (comparing, storing results, etc) can happen within the hub. There may also be provided a GUI frontend dashboard to view the reports/alerts/tool administration and configuration, along with email based alerting.

The tool can monitor/alert on any structured IT infrastructure system, such as a database management system, or OS server (Linux, windows, MAC OS, etc). Data being collected is regarding the current state of the structure within the monitored infrastructure, a "snapshot" of a given point in time. The tool itself can be designated a database- or server-centric comparison engine, which pulls data from various structured IT infrastructure.

Embodiments of the invention can provide a monitoring application which is 'always on'. In embodiments, the system can be self-maintained, for example:
in terms of growth (the application can delete redundant data and utilise reclaimed space to reduce costs of running the application);
in terms of performance (all comparisons and checks are done on the centralised hub, away from any database, which ensures the system does not impact monitored DBs);
in terms of monitoring/alerting (checks can be scheduled and alerts automated, which removes the need for manual efforts to maintain the application).

Embodiments of the invention promote proactive monitoring rather than passive monitoring; since potentially the entire database/dataset is duplicated regularly and monitored for changes, all possible changes should be noted. This information can therefore be used to better control the monitoring process. Moreover, since trends in changes in the database, for example, can be determined, monitoring can to some extent pre-empt potential changes proactively.

Embodiments of the invention can provide the following benefits:
- Reduce risk of database administration (DBA) errors and/or issues caused by erroneous schema changes;
- Identify invalid DB objects and when objects became invalid;
- Provide historical reports on all changes;
- Provide database capacity planning via database space usage reports;
- Ensure DBA standards are being adhered to in all environments;
- Ensure security and compliance standards are being adhered to in all environments.

Another feature provided by embodiments of the invention is the ability to ensure all environments of a system are identical or meet requirements. For example, the tool can monitor/alert if a production environment is not identical to pre-production/lower environments.

In addition, in embodiments, the more these systems are used, the more efficient they become. Rules and comparisons can be based on collected data so the more data that is available, the more accurate the results will be. Each tool in the suite can also utilise data collected from other tools. Using the application as an entire suite increases the accuracy, performance and intelligence of the individual tools.

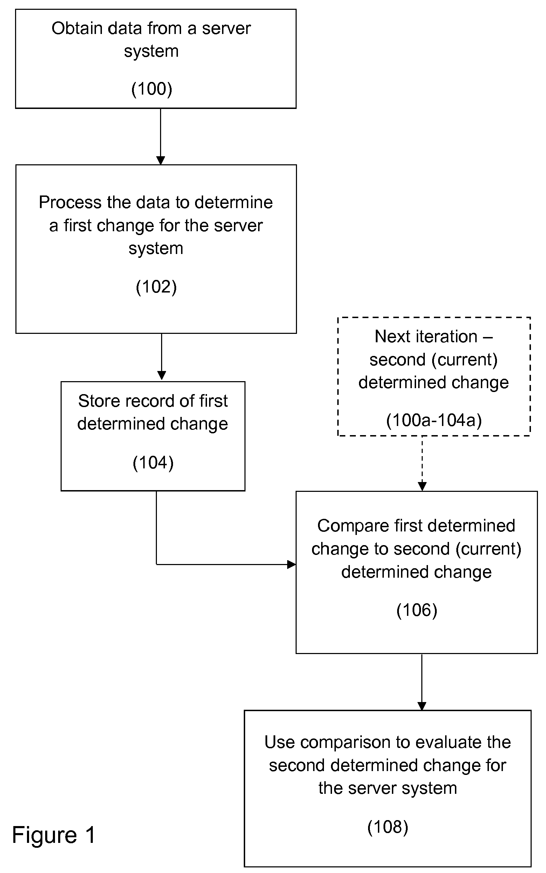

Figure 1 is a diagram illustrating steps of a method according to an embodiment of the invention. Data is obtained from the server system (100), and processed (102) to determine a (first) change for the server system. For example, the data obtained once processed may indicate that a data object, such as a table, has been altered. A record of this first determined change is then stored (104).

In a second iteration, a second round of data is obtained from the dataset or database (100a), and processed to find another (second) change in the dataset/database (102a). A record of this second determined change may also be stored (104a). The first and second changes determined are then compared (106). The comparison is then used to evaluate (108) the second determined change.

For example, the second change determined may also be an alteration to the same table as for the first change determined. The comparison of the first change to the table to the second may indicate that the second was a different kind of change, or similar, or identical, or the like. This information may be useful in tracking changes to this table, or for wider effects.

For example, a series of records of changes may have been stored for a given system that indicate that usually only minor changes are made to data objects. If the latest comparison of the most recent change with a previous change shows that the latest change is much larger than normal, this may be significant for the monitoring system, and a user or other system may need to be alerted.

In an embodiment, combining the current full duplicated dataset and the previously stored detected changes, can be used to create a timeline report showing all changes of the environment from the current point in time to the first day of monitoring.

In another example, if a data object has been changed twice, a comparison of present/previous at a first time point will have picked up the first change (e.g. add a column), and a comparison of present/previous at a second time point will have picked up the second change (e.g. adding a further column). The comparison (106) of the changes may indicate whether the second column added was similar in size, or in data content, for instance.

The comparison may also be across different types of data. For example, changes being monitored on a first dataset may currently be frequent, and changes on a second infrequent. If a recent change to the second dataset follows soon after another, it may be flagged since normal changes are infrequent. If then compared with the frequency of changes on the first dataset, it may however be determined that it is not as frequent as normal behaviour there, and therefore may be deemed safe.

The data housed in the data area or database can be any type of data suitable for a database or monitorable dataset. The data addressed by the monitoring system (i.e. that duplicated from the system) can be any data from the server or database itself, or from the database management system. For example, the data may be data objects in or from the database itself; a data item in the database may be altered. It may be data from or relating to the database schema, such as parameters governing the structure or functionality of the database; for example, an integrity constraint may be changed. It may be the size of the database or data area of the server; a number of objects, size of a matrix or table of values may have been altered, for example by adding a column to a table. It may be a status of the server or database; for example, toggle data noting that the database is running, or down; data noting that given software is installed/running. It may relate to access history; data logs showing which users have accessed the server or database will change with new access instances. It may relate to synchronisation or replication of the database; data denoting when or whether these have occurred recently, or indicating degrees of success. It may relate to the operating system in use. The data may also be or relate to management parameters of the database management system; for example, records of events, actions taken during management, or changes in management systems.

The dataset of the server/database which is obtained or duplicated in each step may include all data from the entire database or data area, in all data categories. Alternatively, it may only include all data from a subset of the database, for example for one of the categories noted above. Where the database is distributed, for example across multiple hardware systems, the (entire/complete) dataset obtained may include data from more than one individual storage means on a respective such hardware system.

There are cases in which the dataset for the (present) data may be different from that for the data to which it is compared in processing; for example, present data indicating a user access may be compared with previous user accesses, but may also be compared with other audit data or DBMS data concerning access rights.

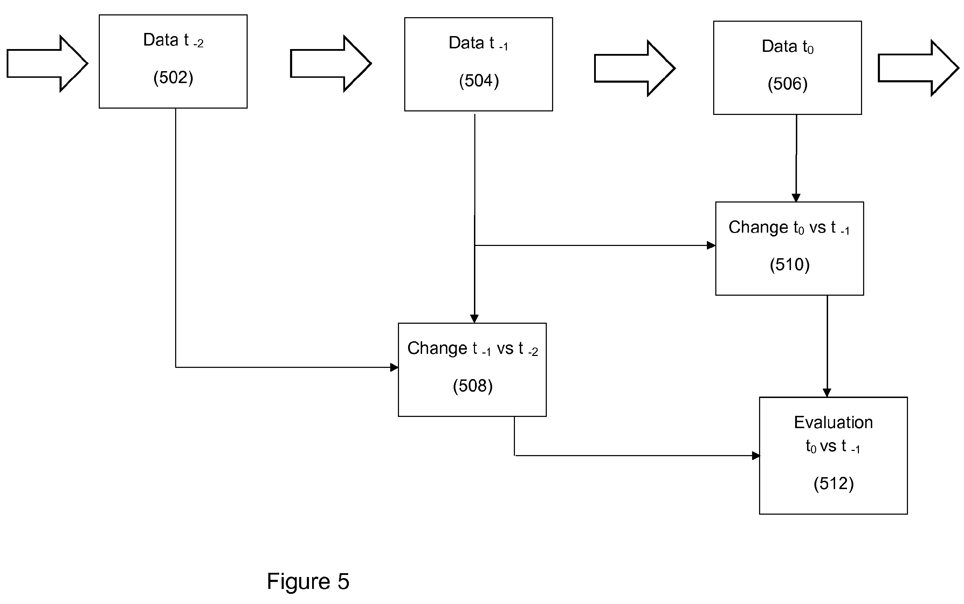

The processing for determining the change will be described in more detail below with reference to Figure 5. Methods and systems for determining the changes in the initial steps will now be outlined.

In an embodiment, all tools in the monitoring suite identify changes/differences using a 'scan' approach. A scan takes a snapshot of an environment at a given time. Comparing the current scan with the last scan can identify any differences in that time period.

In embodiments, the comparison engine may take the following steps:
i. during a 'scan' of a monitored system or infrastructure, data is pulled into a centralized hub by various techniques, depending on what type of infrastructure is being monitored;
ii. the data is then stored in database tables within the hub. The data is labelled with a unique identifier and is also assigned metadata such as a timestamp, a scan run number, a name/description of monitored infrastructure;
iii. on the next scan, the same procedure is followed. Data is pulled, stored and labelled with an identifier and metadata;
iv. the comparison tool initiates and looks for differences between the two scan datasets;
v. results of the scan are then stored in result tables;
vi. result data is also assigned metadata, including:
   date;
   was there actually any difference at all (which will determine if alerts are sent or not sent);
   the severity of the difference - based on pre-defined thresholds of severity, the amount of difference(s) will determine the type/priority of alert sent.
vii. result data can now be used for:
   alerting on changes in a system or infrastructure;
   reporting on changes within a period of time, building a timeline of changes;
   identifying trends/patterns within an infrastructure based on the changes happening over a time period;
   future planning of infrastructure based on reporting data;
   redesigning/improving infrastructure.

For example, with an embodiment in which a database schema is being monitored:
Day 1: a scan is run which captures a snapshot of a specific schema
Day 2: changes are made to a table in the schema
Day 2: a scan is run which captures a new snapshot of the schema. Comparison is made between Scan1 and Scan2 and the table change is identified and alerted as a change.

In embodiments, the system can work on a 'hub and spoke' model. The application monitoring the system runs on a centralised hub and monitors multiple client server or DB environments by pulling the relevant data from each client into the hub and running comparisons on the hub.

Figure 2 is a schematic diagram illustrating a monitoring system according to an embodiment of the invention. The monitoring system (200) is comprised of the plurality of database systems (202a, 202b, 202c) and the single monitoring system 204. Data can be drawn from the servers by the central monitoring system, as indicated by the arrows. The processing is then carried out on the monitoring system. The monitoring system, having determined changes in the servers can output reports or alerts (206) based on the determined changes. For example, a report could list the historical changes for a given database, for a certain dataset. An alert can be sent to a user or another system, when a change detected is particularly significant, such as a large change to a dataset/database, or a change in a database which is not frequently accessed.

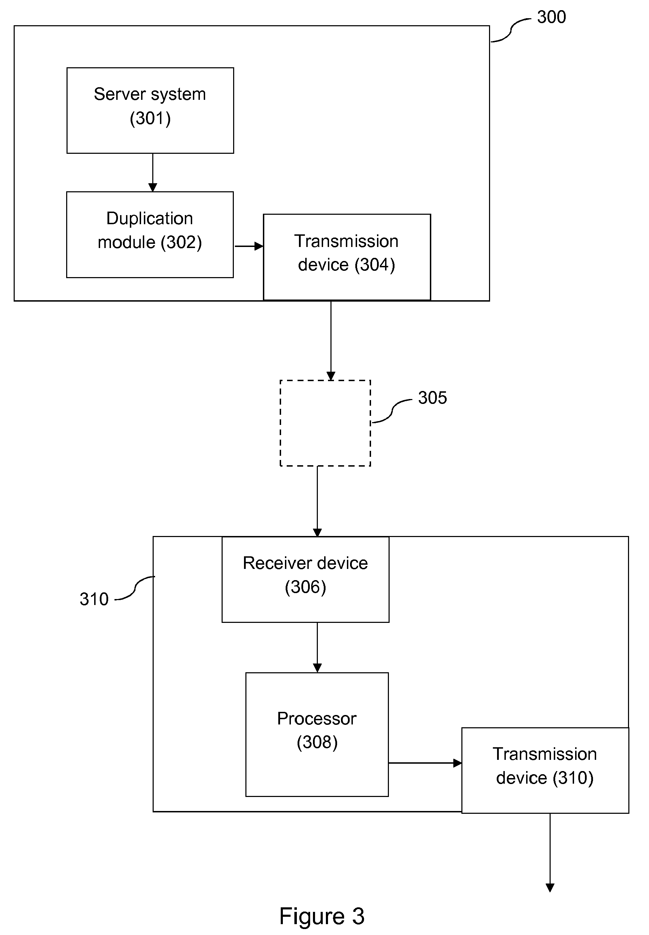

Figure 3 is a diagram illustrating components of a monitoring system according to an embodiment of the invention. The first hardware system (300) houses the server system (301), a duplication module (302) and a transmission device (304). Data can be pulled from the system and duplicated by the duplication module, and then transferred elsewhere by the transmission device. The medium by which the transfer takes place is indicated at box 305; this may be a network, which communications devices on the first and second hardware systems communicate with. It may simply be that the two systems are directly connected.

The first hardware system may be any such system capable of storing a database. The transfer of the data duplicated from the system, to the second hardware system can be implemented depending on the nature of the separation of the first and second hardware systems. These may simply be physically separated, though connected by wiring or a bus, for example in a simple system containing two hardware subsystems. The transfer can then simply be made along the bus. In a client-server type system, where the monitoring system is a server for the database clients, the transfer may be over a network.

The second hardware system 310 houses a receiver device (306) and a processor (308). The receiver receives the transferred duplicated data from the first hardware system, and passes it to the processor. The processor undertakes tasks such as processing the data to determine changes.

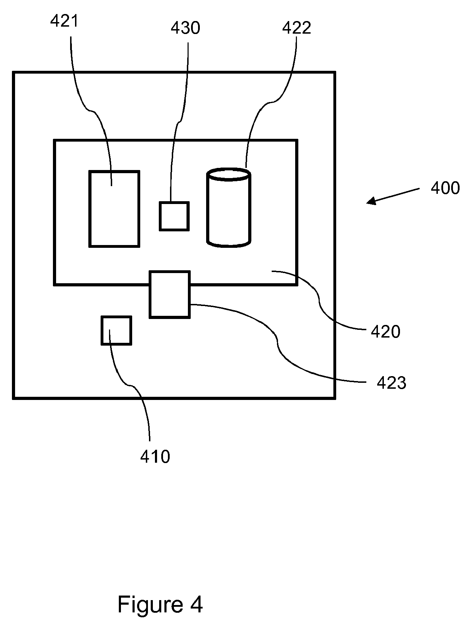

Figure 4 is a diagram illustrating the components, structure and functionality of a server system (400) according to an embodiment of the invention, which can provide the features of the monitoring server (204) shown in Figure 2, for example processing the data to determine changes in the monitored system(s). Note that a server such as this could also provide the functionality for a server system such as those shown in Figure 2 (202a, 202b, 202c).

The server comprises a processing environment 420 with processor 421 and memory 422, with associated communications functionality 423. The communications functionality may include a networking capability allowing communication with a network, or directly with another server or computer device, such as a monitoring server (204) or a server or database system (202a, 202b, 202c). This communication may be secured. The memory 422 may store readable instructions to instruct the processor to perform the functions of the monitoring system. The processor 421 is a representation of processing capability and may in practice be provided by several processors. A database 410 is provided, storing data as applicable. For the monitoring server (204), this database can provide the storage for previous data transferred from the databases, for records of previous changes, and the like. Elements shown within the processing environment 420 use the processor 421 and the memory 422 to deliver functionality; for example, these elements can provide steps of embodiments of the invention such as comparing determined changes and using the comparison to evaluate the changes. A database management system (430) module can be located within the processing environment 420, to provide the management functions for a database. The database management system may also comprise functions of other parts of the server, such as the processor 421, the memory 422 and the database 410 itself.

The computing devices noted above with reference to Figures 3 and 4 may include one or more of logic arrays, memories, analogue circuits, digital circuits, software, firmware and processors. The hardware and firmware components of the computing devices may include various specialized units, circuits, software and interfaces for providing the functionality and features described herein. The processor(s) may be or include one or more microprocessors, application specific integrated circuits (ASICs), programmable logic devices (PLDs) and programmable logic arrays (PLAs).

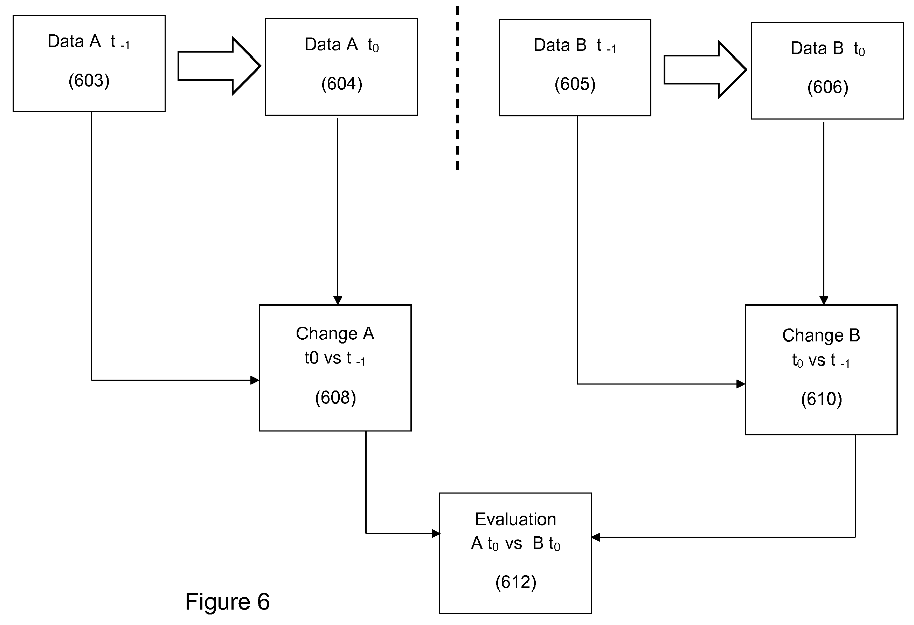

Figures 5 and 6 are schematic diagrams illustrating methods according to embodiments of the invention.

In a typical monitoring scheme using embodiments of the invention, duplicated data from the system is continually being transferred, for example at scheduled times, to the separate hardware system so that the data and the subsequent additions and updates to that data can be processed to find changes to the server/database.

Figure 5 illustrates an embodiment in which data is repeatedly obtained from the same dataset, at different time points. Boxes 502, 504 and 506 illustrate data being obtained from the server/database at three different time points. For the first, data is obtained at time t-2 (502); following this, data is obtained at time points t-1 (504) and t0 (506). A change (508) is determined from the data at the t-2 and t-1 time points, in the manner illustrated in Figure 1 and described above. A change (510) is also determined from the data at the t-1 and t0 time points. These two changes determined are then used to provide an evaluation of the t0 and t-1 time point changes. For example, the changes determined may be successive changes to the database, and the comparison of the two changes may for example indicate that the second change is similar to the first change.

Incidentally, whenever a change is determined between data at respective time points, the change itself may be stored, and the data which was used to determine the change can then be discarded. This allows for a history of the changes to the database to be stored; it would likely be prohibitive to store each copy of the entire contents of the dataset. By storing only the changes identified, and the latest version of the dataset ready for comparison with the next version obtained, the storage needed can be greatly reduced, sufficiently for the record of each determined change to be maintained. Similarly, when evaluations or comparisons of such changes are made, it may be that (records of) these evaluations or comparisons can be stored without having to store the determined changes that were used; in such case, the determined changes themselves may be able to be discarded.

Figure 6 illustrates an embodiment in which data is repeatedly obtained from a plurality of datasets, at different time points, and changes for different datasets are compared. Boxes 603 and 604 illustrate data being obtained from one system at different time points, and boxes 605 and 606 illustrate data being obtained from another system at different time points. For the first, data is obtained at time t-1 (603) and at time t0 (604); for the second system, data is also obtained at t-1 (605) and t0 (606). Note that the time points t-1 and t0 may not be precisely the same for the two systems, or even close temporally, as long as the changes are available together at some point for evaluation.

A change (608) is determined from the first system data in the manner illustrated in Figure 1 and described above, and similarly a change (610) is determined from the second system data. These two changes determined, from different datasets, are then used to provide an evaluation of the changes between the two datasets (at time t0). For example, if it is determined that the first dataset has been changed, this may not be significant if all other datasets have not changed recently. However, if it is also determined that the second dataset has changed, once the evaluation (612) of the two changes is made, it will be apparent that more than one dataset is being changed at the same/similar time, and therefore this may be significant enough to be flagged or reported.

The time points considered may not follow sequentially; for example, a server or database changing regularly may have a change determined between a first or base data version and later versions, rather than comparing only the latest (two) versions. Different datasets may compare changes from different time points with each other, or combinations of changes from other time points or datasets.

Once such evaluations are available across time points for datasets, and/or between datasets, various factors can be noted or reported from the output. In one example, it can be determined whether a system is slowing down in processing time, from the history of the changes being made. This can be reported to a user or to another part of the system. A capacity of a database can be tracked, and a spike noticed in a given month by comparing this change with the history; the spike can be reported, and the nature of it (size, duration) further determined from comparison of this change with previous spikes, and spikes in other databases or datasets. Patterns in changes in systems can be picked up, and deviations from the patterns noticed.

Prioritisation of changes determined is also facilitated. If a particularly significant change is made to a system (as determined by comparison with other changes) this can be reported ahead of other changes determined. Categorisation is also available; changes in the same or different systems can be classed together by categories, unrelated to those categories in the data itself if necessary. For example, all changes unexpected in view of the histories recorded for that dataset can be categorised together (as unexpected changes).

In embodiments, the hub monitoring system can be a centralised repository for all monitored environments within an organisation. All data is kept in the central hub and can be used, for example, for company-wide reporting. For instance, a report can be run to show the percentage of all environments in the company that adhere to company standards.

A specific embodiment of the invention can be described as follows, in relation to a database (server) system. The system works by querying database views for all objects and inserts the data into a centralized repository for comparison.
1. A package queries the database object views on each client database and inserts them into the repository via a DB link.
2. The repository contains tables which will hold the data in batch format from the Client DBs:
   i. The first run will contain all the schema objects as batch ID 1;
   ii. The second run will hold all the schema objects as batch ID 2.
3. There is a comparison package in the repository which will query the tables:
   i. The comparison looks for differences between the last batch of inserted data and the second to last batch.
4. Any differences in the schemas between the two batches will be written to a report and emailed;
   i. the system will use scheduling and alerting facilities in order run the reports.

The differences can also be stored, and batch ID 1 can be deleted, though batch ID 2 will usually be maintained for comparison with the next scan run.

Embodiments of the invention can use features such as those described above to provide a suite of tools, each with their own specific role in monitoring specific areas of a database infrastructure. Examples are:
Schema - monitoring any changes to objects (tables, indexes, etc) in a schema and alerting the relevant user, device, system, or networked device when changes occur.
Capacity - tracking database growth and displaying growth patterns in a graphical format.
Scan - showing differences between multiple databases, including DB configuration settings, sizes, parameters, and the like. Useful for comparing different environments of one DB (test vs production).
Audit - monitoring database user access that does not adhere to audit standards (e.g. alert on developers who wrongfully have admin privileges).
Data - monitoring tool that ensures replicated databases are in sync and will alert when there are differences in data between replicated DBs.
Server - alerting on changes to OS level of a database server. Changes in memory parameters, configuration, software, directories, permissions.
Infra - reporting on all software currently installed on a server.
Backups- checking and reporting on database backups.
Replication - checking replication procedures
Standard - checking that all DBs are in the appropriate directory, and that servers are on the appropriate port, for example.

For example, Audit is a monitoring tool that checks the DB user permissions which have been added or deleted from day to day. This program also checks changes in the status of a request from implemented, pending or emergency implementation.

Audit operates on the client to hub model of the monitoring system, in which an identity checking application takes the form of the client. Requests for access are made through the identity checking application and are sent from the client to the hub, as part of the regular duplicate data, transfer to hub procedures as described above with basic embodiments of the invention. At the hub, procedures are run against the data. Finally results are sent via email from the hub to a destination, for example an administrator checking access permissions.

The procedures run on the hub compare current data against previous scans, and isolate new data. Any new data ie: new requests, are stored in a scan results table. These new requests are the details reported by email to the relevant party.

For example, Audit can check for any accesses of the database that do not have records in an identity check application (by detecting the changes in the access record between versions of the dataset), or prompt an alert on any access which has no request whatsoever.

In an embodiment, the audit reports can be filtered after the initial step of comparing the data with previous data to find differences. For example, a filter can remove access requests for employees that have DBA roles. These requests will be noted and added to the results table but will not be sent through the email system. This ensures only employees that are not entitled to access will have their request flagged.

As with other embodiments above, where data is no longer needed after compare procedures have been run, this can be removed to conserve space. The initial scan may need to be retained permanently; the current and previous scan are needed to run procedures but will be removed as needed.

Another example is the Schema tool, the purpose of which is to monitor any changes to a single database from day to day.

The following objects are monitored:
Tables
   - New or deleted tables
   - Table column definitions
Indexes
   - Status
   - Uniqueness
   - Indexed Columns
Procedures
   - New or deleted
Constraints
   - New or deleted
   - Constraint Type
   - Constraint Columns
Triggers
   - New or deleted
   - Status
Views
Table Partitions
Index Partitions

The monitoring system of embodiments of the invention can also provide an overview of all monitoring tools, for example a dashboard application reflecting the results of the tasks the tools implement. This will contain the specified information from the particular scans that are needed for monitoring.

The dashboard itself will dynamically display key information in a variety of pages, depending on which scan tools are being/will be utilised.

It will be appreciated by those skilled in the art that the invention has been described by way of example only, and that a variety of alternative approaches may be adopted without departing from the scope of the invention, as defined by the appended claims.

## Claims

1. A method of monitoring changes for a server system (200), comprising:
obtaining (100) data from the server system;
processing (102), at a processor, the data to determine a first change for the server system;
storing (104) at a data storage device a record of the first determined change;
comparing (106), at the processor, the first determined change to a second determined change (100a-104a) for the server system; and
using (108), by the processor, the comparison to evaluate the second change for the server system.

2. A method according to Claim 1, wherein the second determined change is a current change for the server system, and the first determined change is a previously determined change for the server system,
and wherein the step of comparing comprises comparing (106) the stored record of the previously determined change to the current change.

3. A method according to any preceding claim, wherein the step of obtaining comprises obtaining data from a dataset (502, 504, 506) of the server system, and wherein the method comprises, for the second determined change:
obtaining data from said dataset of the server system; and
processing, at the processor, the data to determine the second change.

4. A method according to Claim 1 or Claim 2, wherein the steps of obtaining and processing comprise:
obtaining data from a first dataset (603, 604) of the server system, and processing the data to determine the first change; and
obtaining data from a second dataset (605, 606) of the server system, and processing the data to determine the second change.

5. A method according to any preceding claim, wherein the steps of comparing and using the comparison comprise:
comparing, at the processor, one or more qualitative or quantitative parameters for the first and second determined changes for the server system; and
using, by the processor, the one or more parameters to evaluate one or more differences between the second change and the first change.

6. A method according to any preceding claim, comprising, following the step of using the comparison:
recording an evaluation of the second change; and
transmitting (310) a message enclosing the evaluation.

7. A method according to any preceding claim, wherein the steps of obtaining the data and processing the data to determine the first change for the server system comprise:
obtaining present data from the server system;
obtaining previously obtained data from the server system; and
determining, at the processor, the first change between the present data and the previously obtained data.

8. A method according to any preceding claim, wherein the steps of obtaining the data and processing the data to determine the first change comprise:
obtaining data, for a first time point, of a dataset of the server system;
obtaining data, for a second time point, of the dataset of the server system,
comparing, at the processor, the first time point data with the second time point data; and
using, by the processor, the comparison to determine the first change for the server system between the first and second time points.

9. A method according to any preceding claim, comprising, following the step of storing the record of the change determined, discarding data used to determine the change.

10. A method according to any preceding claim, wherein the server system is a database system, and comprises: a database (410); and a database management system (430).

11. A method according to any preceding claim, wherein the data obtained comprise data relating to one or more of: data objects; schema; size; status; access history; synchronisation; replication; operating system; and management parameters of a database of the server system.

12. A system for monitoring changes for a server system (200), comprising a processor configured to carry out the method of any preceding claim.

13. A system for monitoring changes for a server system (200), comprising:
a first hardware system (300) on which the server system is operated;
a second hardware system (310) separate from the first hardware system, comprising at least one processor (308); and
a transmission device configured to transfer (304) data from the server system from the first hardware system on which the server system is operated, to the second hardware system,
wherein the processor of the second hardware system is configured to: obtain (100) data from the server system; process (102) the data to determine a first change for the server system; store (104) a record of the first determined change; compare (106) the first determined change to a second determined change (100a-104a) for the server system; and use the comparison (108) to evaluate the second change for the server system.

14. A computer program application, or a computer readable medium comprising computer program code, adapted, when loaded into or run on a computer or processor, to cause the computer or processor to carry out a method according to any of the Claims 1 to 11.
